Europäisches Patentamt

European Patent Office

Office européen des brevets

(19)

(11) **EP 1 434 442 A2**

## (12) EUROPEAN PATENT APPLICATION

(43) Date of publication:
**30.06.2004 Bulletin 2004/27**

(51) Int Cl.7: **H04N 7/26**, H04N 7/50

(21) Application number: **03029085.2**

(22) Date of filing: **17.12.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **27.12.2002 KR 2002085447**<br><br>(71) Applicant: **Samsung Electronics Co., Ltd.**<br>**Suwon-si, Gyeonggi-do (KR)** | (72) Inventor: **Song, Byung-cheol,**<br>**405-1104 Cheongmyung Maeul**<br>**Paldal-gu Suwon-si Gyeonggi-do (KR)**<br><br>(74) Representative: **Grünecker, Kinkeldey,**<br>**Stockmair & Schwanhäusser Anwaltssozietät**<br>**Maximilianstrasse 58**<br>**80538 München (DE)** |

## (54) Advanced DCT-based video encoding method and apparatus

(57) An improved motion image encoding method is based on a discrete cosine transform (DCT)-based motion image encoding method that uses a plurality of modified quantization weight matrices, the method including selecting one of the plurality of modified quantization weight matrices based on noise information from input image data, performing DCT on the input image data, and performing quantization on the DCT input image data using the selected modified quantization weight matrix.

FIG. 10

**Description**

The present invention relates to a method and apparatus to encode a motion image, and more particularly, to a method and apparatus to remove noise distortion effectively from an image input to a discrete cosine transform (DCT)-based motion image encoder.

A setup box has been developed that receives analog terrestrial broadcast content and encodes it using compression techniques such as MPEG 2 and MPEG 4. However, in the case of terrestrial broadcast content, images received at a receiving site are likely to be distorted due to channel noise. For instance, white Gaussian noise may be contained in an entire image. If such an image is compressed without removal of the noise from the image, compression efficiency is lowered due to the noise.

Accordingly, significant research has been conducted to remove noise from motion images. Conventionally, noise is removed from an image using a spatial noise reduction method or a temporal noise reduction method.

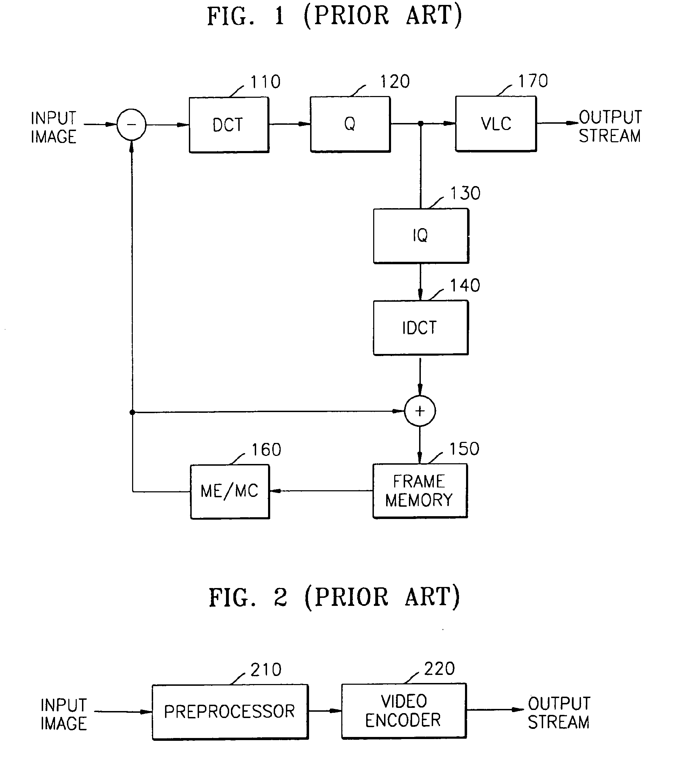

A conventional noise removal method will now be explained with reference to FIGS. 1 through 4. FIG. 1 is a block diagram showing a general encoder that encodes motion images. To conduct video-on-demand (VOD) services or motion image communication, the encoder produces a compressed bit stream containing the related data.

A discrete cosine transform (DCT) unit 110 performs a DCT operation on input image data in units of $8\times8$ pixel blocks to remove spatial correlation. A quantization (Q) unit 120 performs quantization on a DCT coefficient obtained by the DCT unit 110 to accomplish high efficient loss compression.

An inverse quantization (IQ) unit 130 inversely quantizes image data quantized by the Q unit 120. An inverse DCT (IDCT) unit 140 performs IDCT on image data that is inversely quantized by the IQ unit 130. After the IDCT unit 140 performs IDCT on the image data, a frame memory 150 stores the image data on a frame-by-frame basis.

A motion estimation/motion compensation (ME/MC) unit 160 estimates a motion vector (MV) for individual macro blocks and a sum of absolute difference (SAD) corresponding to a block matching error, based on an input current image data frame and a previous image data frame that is stored in the frame memory 150.

A variable length coding (VLC) unit 170 removes statistical redundancy from DCT-ed and quantized data using the MV estimated by the ME/MC unit 160.

FIG. 2 is a block diagram illustrating a motion image encoder that uses a conventional noise reduction method. The motion image encoder includes a general video encoder 220 as shown in FIG. 1 and a preprocessor 210. The preprocessor 210 removes noise from an input image using a conventional noise reduction method, and then inputs the input image to the video encoder 220.

In general, the preprocessor 210 rejects noise from an image using a spatial noise reduction method or a temporal noise reduction method. A spatial-temporal noise reduction method, which is a combination of these methods, may also be used.

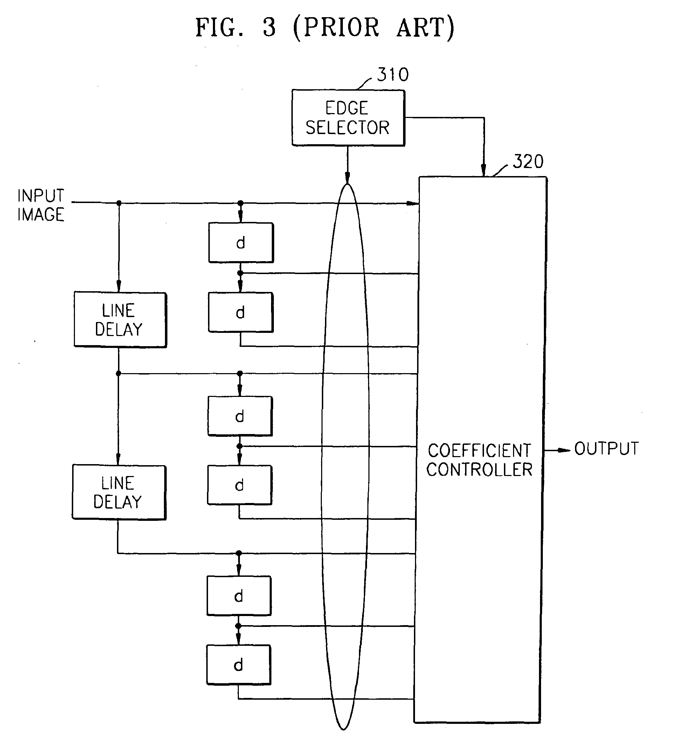

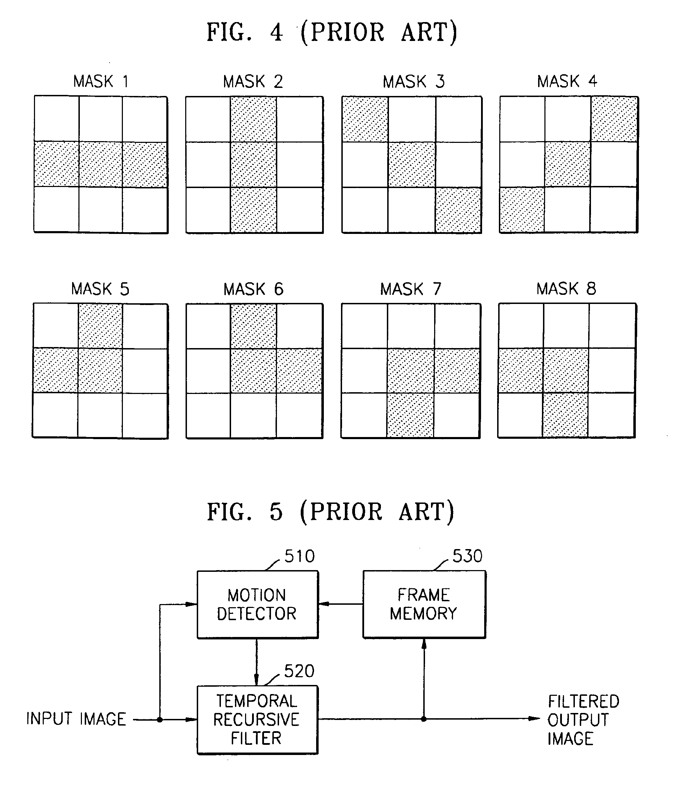

FIGS. 3 and 4 are diagrams illustrating the spatial noise reduction method. Referring to FIG. 3, an edge selector 310 performs high-pass filtering on the eight spatial noise reduction filtering masks shown in FIG. 4 to obtain filtering outputs, and selects a filtering direction to obtain the smallest filtering output with respect to each mask. A coefficient controller 320 performs low-pass filtering in the selected direction by adjusting low-pass filter coefficients in the selected filtering direction. The greater the number of masks the edge selector 310 uses, the higher the precision of directional detection, but the lower the noise reduction effect. On the contrary, the less number of masks used, the higher the noise reduction effect, but the higher the frequency of edge blurring.

FIG. 5 is a block diagram illustrating the temporal noise reduction method. Referring to FIG. 5, a motion detector 510 estimates the motion and the noise magnitude in a current image, based on an input image and a previous image stored in the frame memory 530. If the motion detector 510 determines a minor amount of motion and a major amount of noise is contained in the current image, a temporal recursive filter 520 performs strong low-pass filtering on the current image in the direction of a temporal axis. In contrast, if the motion detector 510 determines a major amount of motion and a minor amount of noise are contained in the current image, the temporal recursive filter 520 outputs the current image without low-pass filtering.

The temporal noise reduction method is effective in processing still images. The temporal noise reduction method is disclosed in US Patent No. 5,969,777.

However, even when an image is filtered using a conventional spatial noise reduction filter that sharpens the edge of the image, a blurring effect still occurs. Also, since a conventional temporal noise reduction filter is not appropriate for filtering motion images, excess noise still remains in the images.

Additional aspects and advantages of the invention will be set forth in part in the description which follows and, in part, will be obvious from the description, or may be learned by practice of the invention.

It is the object of the present invention to provide a noise reducing method and apparatus that remove noise from an image by filtering the image in a motion image encoder.

This object is solved by the invention as claimed in the independent claims.

Preferred embodiments are defined by the dependent claims.

The present invention also provides a motion image encoding apparatus and method that use such a noise removing method and apparatus.

According to an aspect of the present invention, a discrete cosine transform (DCT)-based motion image encoding method uses a plurality of modified quantization weight matrices, the method comprising: selecting one of the plurality of modified quantization weight matrices based on noise information from input image data; performing DCT on the input image data; and performing quantization on the DCT input image data using the selected modified quantization weight matrix.

According to another aspect of the present invention, a DCT-based motion image encoding method comprises: creating a modified quantization weight matrix using noise information from input image data; performing DCT on the input image data; and performing quantization on the DCT input image data using the modified quantization weight matrix.

According to yet another aspect of the present invention, a DCT-based motion image encoding apparatus uses a plurality of modified quantization weight matrices and comprises: a modified quantization weight matrix storage unit which stores the plurality of modified quantization weight matrices; a modified quantization weight matrix determination unit which selects one of the plurality of modified quantization weight matrices based on noise information from input image data; a DCT unit which performs DCT on the input image data; and a quantization unit which performs quantization on the DCT transformed data using the selected modified quantization weight matrix.

According to still another aspect of the present invention, a DCT-based motion image encoding apparatus, comprises a modified quantization weight matrix creation unit which creates a modified quantization weight matrix based on noise information from input image data; a DCT unit which performs DCT on the input image data; and a quantization unit which performs quantization on the DCT transformed data using the created modified quantization weight matrix.

The invention will become apparent and more readily appreciated from the following description of the preferred embodiments, taken in conjunction with the accompanying drawings of which:

FIG. 1 is a block diagram illustrating a conventional Moving Picture Expert Group (MPEG) encoder;
FIG. 2 is a block diagram of conventional motion image encoder using a preprocessor;
FIG. 3 illustrates a conventional spatial noise reduction filter;
FIG. 4 illustrates eight masks on which filtering is performed by the filter of FIG. 3;
FIG. 5 is a block diagram illustrating a conventional temporal noise reduction filter;
FIG. 6 is a block diagram illustrating an approximated generalized Wiener filtering which filters non-zero-mean image data;
FIG. 7 is a block diagram illustrating the approximated generalized Wiener filtering which filters non-zero-mean image data in a discrete cosine transform (DCT) domain;
FIGS. 8A through 8C illustrate the structures of filters used during encoding of an intra block;
FIG. 9 illustrates the structure of a general video encoder used during encoding of an inter block;
FIG. 10 is a block diagram of a motion image encoder according to an embodiment of the present invention; and
FIG. 11 is a block diagram of a motion image encoder according to another embodiment of the present invention.

Reference will now be made in detail to the present preferred embodiments of the present invention, examples of which are illustrated in the accompanying drawings, wherein like reference numerals refer to the like elements throughout. The embodiments are described below in order to explain the present invention by referring to the figures.

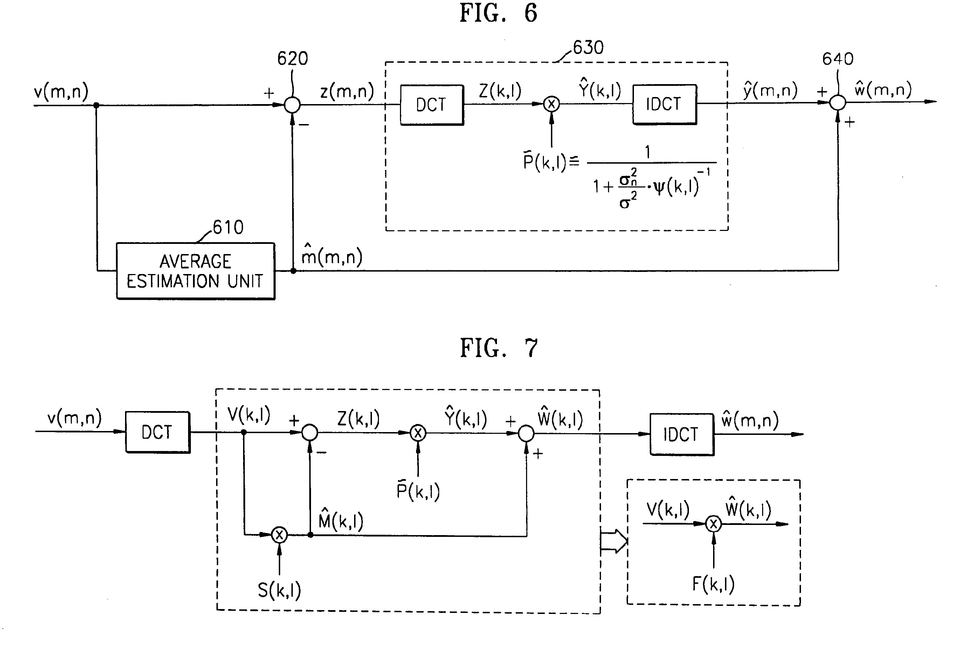

Hereinafter, an improved noise reduction method utilized by an embodiment of the present invention will be described with reference to FIGS. 6 through 9.

Preprocess filtering is a major process included in motion image encoding. Noise contained in an image is removed through the preprocess filtering, thus improving encoding efficiency. To remove noise in an image, conventional preprocess filtering is generally performed in the spatial pixel domain of an encoder, whereas preprocess filtering according to an embodiment of the present invention is carried out in the discrete cosine transform (DCT) domain of an encoder.

In particular, in embodiments of the present invention, approximated, generalized Wiener filtering is performed to remove noise from an image. The approximated Wiener filtering is realized by performing fast unitary transformation, such as DCT, on an image. Alternatively, another filtering technique may be used to filter an image in the DCT domain.

FIG. 6 is a block diagram illustrating approximated, generalized Wiener filtering which filters non-zero-mean image data in accordance with an embodiment of the present invention.

In FIG. 6, $v$ denotes an input image block that contains noise, and $\hat{\omega}$ denotes a row-ordered column vector of a filtered image block. In general, the input image block $v$ indicates a non-zero mean image block. An average estimation unit 610 estimates a mean $m$ of an image block, and a subtracter 620 subtracts the estimated average $m$ from the input image block $v$ and outputs data $z$ as the result.

Next, the data *z* is filtered by a filtering unit 630 and the filtering unit 630 outputs filtered data $\hat{y}$ as the filtering result. An adder 640 combines the filtered data $\hat{y}$ and the average *m* of the image block and outputs desired filtered data ω as the combination result.

A method to perform generalized Wiener filtering on a zero-mean image will now be described. Generalized Wiener filtering performed on a zero-mean image is expressed as follows:

$$\hat{y} = A^{*T}[AL\ A^{*T}]Az = A^{*T}\widetilde{L}Z \ \dots \ (1),$$

wherein $\widetilde{L} = AL\ A^{*T}$, $L = [I + \sigma_n^2 R^{-1}]^{-1}$, $R = E[y\ y^T]$, $Z = Az$, $\sigma_n^2$ denotes a noise variance, and *A* denotes unitary transformation. In this embodiment, an image is filtered using DCT, and therefore, *A* is a DCT. Also, $A = (C_8 \otimes C_8)$ when $C_8$ denotes an 8×8 DCT matrix and $\otimes$ denotes a Kronecker multiplication operator.

In general, because $\widetilde{L}$ is approximately diagonalized in the unitary transformation, Equation (1) may also be expressed as follows:

$$\hat{y} = A^{*T}\hat{Y} \tag{2},$$

wherein

$$\hat{Y} = \widetilde{L}Z \approx [Diag\ \widetilde{L}]Z \ .$$

When Equation (2) is applied to an 8×8 image block, the following equation is obtained:

$$\widetilde{y}(k,l) \approx \widetilde{p}(k,l)Z(k,l) \ \dots \ (3)$$

$\widetilde{p}(k,l)$ may be expressed as follows:

$$\widetilde{p}(k,l) \cong \frac{1}{1 + \dfrac{\sigma_n^2}{\sigma^2}\psi(k,l)^{-1}} \ \dots \ (4),$$

wherein $\psi(k,l)$ denotes normalized element values that are placed along a diagonal line of $AR\ A^{*T}$, and $\sigma^2$ denotes a variance of the original image *y*. In general, because $\sigma^2$ is an unknown value, it is replaced with a value which is obtained by subtracting a noise variance from a variance *z*.

According to Equation (3), a zero-mean image block undergoes approximated, generalized Wiener filtering by multiplying two-dimensional DCT coefficients by $\widetilde{p}(k,l)$. After determination of filtered data $\hat{y}(m,n)$, a final filtered image is obtained by combining the filtered data *y(m,n)* and an average *m(m,n)*.

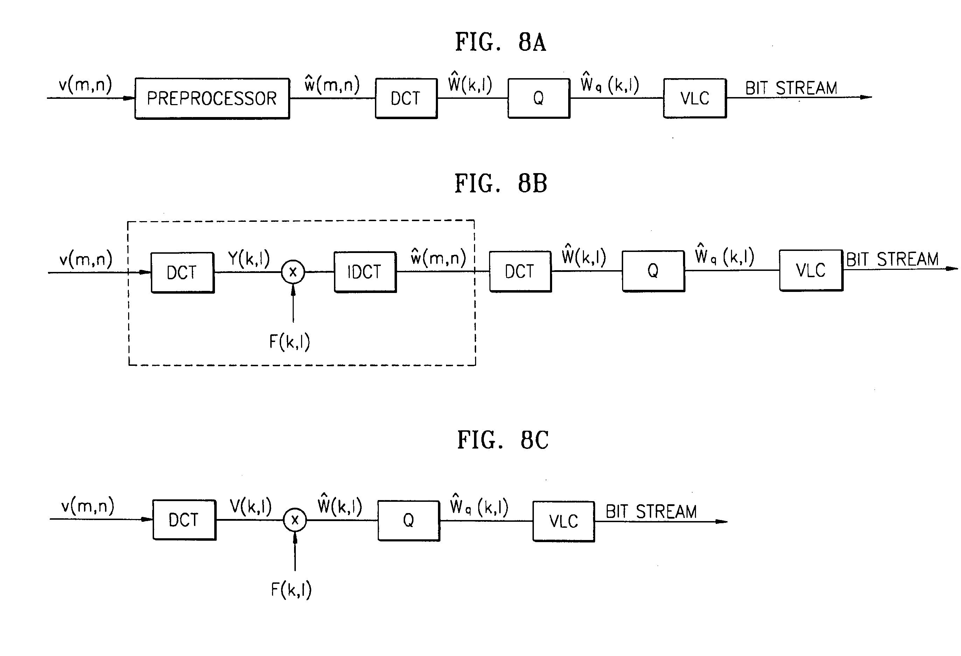

Generalized Wiener filtering will now be described with respect to a non-zero image model. FIG. 7 shows the structure of an approximated generalized Wiener filter which filters a non-zero image block in a DCT domain in accordance with an embodiment of the present invention. That is, the filter of FIG. 7 filters image models by performing adding and subtracting operations thereon. Assuming that an average image block is obtained by multiplying an input noise-contained DCT block by *S(k,l)*, as expressed in Equation (5), the filter in FIG. 7 may be reconfigured as shown in FIG. 8.

$$\hat{M}(k,l) = S(k,l).V(k,l) \tag{5}$$

On the above assumption, an image block filtered in a DCT domain may be expressed using Equations (3) and (5), as follows:

$$\hat{W}(k,l) = \hat{Y}(k,l) + \hat{M}(k,l) = (\hat{p}(k,l)\bullet(1-S(k,l)) + S(k,l))\bullet V(k,l)$$

$$= F(k,l)\bullet V(k,l) \qquad (6)$$

$F(k,l)$ may be expressed as follows:

$$F(k,l) = \hat{p}(k,l)\bullet(1-S(k,l))+S(k,l) = \frac{1 + S(k,l)\bullet\dfrac{\sigma_n^2}{\sigma^2}\cdot\dfrac{1}{\psi(k,l)}}{1 + \dfrac{\sigma_n^2}{\sigma^2}\bullet\dfrac{1}{\psi(k,l)}} \qquad (7)$$

Equation (6) reveals that the generalized Wiener filtering may be simplified using only $F(k,l)$ and a multiplying operation. Equation (7) discloses that $F(k,l)$ is determined by a signal to noise ratio (SNR), a covariance matrix, and an average matrix.

In this embodiment, a matrix, which satisfies Equation (5), is selected as an average matrix $S(k,l)$. For example, a DC value of the average matrix $S(k,l)$ in a DCT block may be set forth as follows:

$$S(k,l) = \begin{bmatrix} 10000000 \\ 00000000 \\ 00000000 \\ 00000000 \\ 00000000 \\ 00000000 \\ 00000000 \\ 00000000 \end{bmatrix} \dots (8)$$

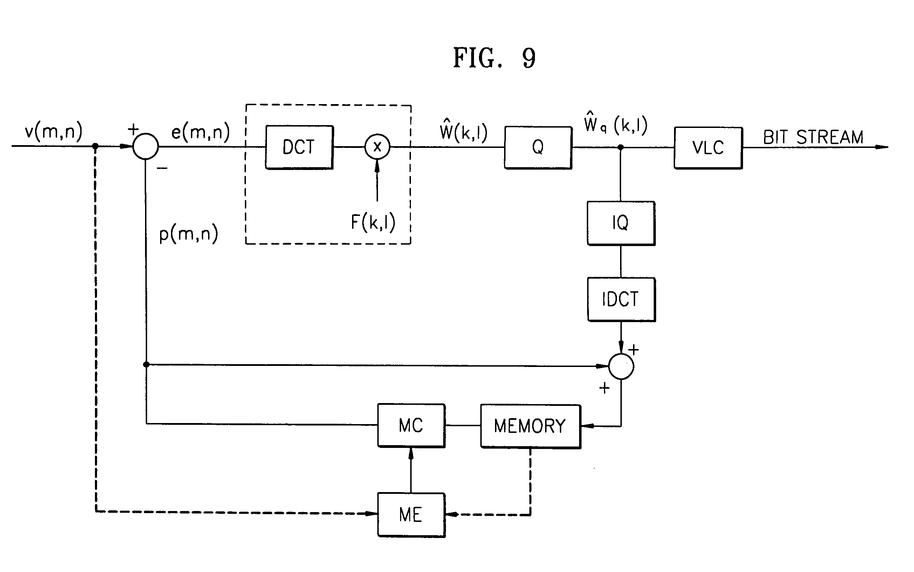

Preprocessing in a motion image encoder will now be described with reference to FIGS. 8 and 9. As mentioned above, even a non-zero input image block may undergo approximated, generalized Wiener filtering by performing a multiplying operation on DCT coefficients.

FIGS. 8A through 8C are block diagrams illustrating the structures of a motion image encoder in which approximated, generalized Wiener filtering is performed on an intra block. The encoders of FIGS. 8A and 8C filter an intra block in a DCT domain, and perform quantization and variable length coding (VLC) on the filtered intra block without inverse DCT (IDCT).

In other words, an intra block is simply filtered by multiplying DCT coefficients by $F(k,l)$, and then, each of the DCT coefficients is multiplied (or divided) by a characteristic value in a quantization table. Accordingly, the multiplication and quantization are combined to make a process.

As is illustrated in FIG. 9, the approximated generalized Wiener filtering shown in FIGS. 8A through 8C may also be performed on an inter block, assuming that noise is removed from motion-compensated estimation block information $p(m,n)$.

In general, a covariance $\psi(k,l)$ is determined depending on whether an input image block is an inter block or an intra block. Thus, $F(k,l)$ expressed in Equation (7) is also changed according to a block type.

Hereinafter, a method of calculating an estimated variance for an intra or inter block from which an average is subtracted, will be explained with reference to Equation (9). Where S denotes an N×N block from which an average is subtracted (N=8), a variance matrix of the block may be obtained as follows:

$$\hat{C} = \frac{1}{2}\frac{N}{2trace(S^T S)}(S^T S + S S^T) \qquad (9)$$

Equation (9) is disclosed in an article entitled "Covariance Analysis of Motion-Compensated Frame Differences" listed in IEEE Trans. Circ. Syst. for Video Technol., W. Niehsen and M. Brunig, June 1999.

An estimated variance may be calculated by applying Equation (9) to a plurality of images. In the case of an intra block, the original image is processed on an $8\times8$ block-by-block basis. In the case of an inter block, inter blocks are detected and collected using a full search algorithm, and an estimated variance is calculated using Equation (9).

Next, R = $E[y\,y^T]$ is calculated using the calculated estimated variance and DCT is performed on $R$ to obtain $\psi = AR\,A^{*T}$.

A method of calculating $\hat{\sigma}^2/\sigma^2$ expressed in Equation (7) will now be described. First, a noise variance $\sigma^2_n$ in $\hat{\sigma}^2/\sigma^2$ may be calculated using a noise estimation unit. Also, when noise and the original image pixels are random variables, the variables are considered independent. Thus, an estimated value $\hat{\sigma}^2$ of a variance $\sigma^2$ of the original image is calculated as follows:

$$\hat{\sigma}^2 = \max(\hat{\sigma}^2_z - \hat{\sigma}^2_n, 0) \tag{10},$$

wherein $\sigma^2_z$ denotes a variance of a macro block (MB). A general motion image encoder calculates the variance $\sigma^2_z$ on an MB-by-MB basis. In this embodiment, $8\times8$ blocks included in the same MB are considered to have the same variances, thus reducing additional computation for variances of the respective $8\times8$ blocks.

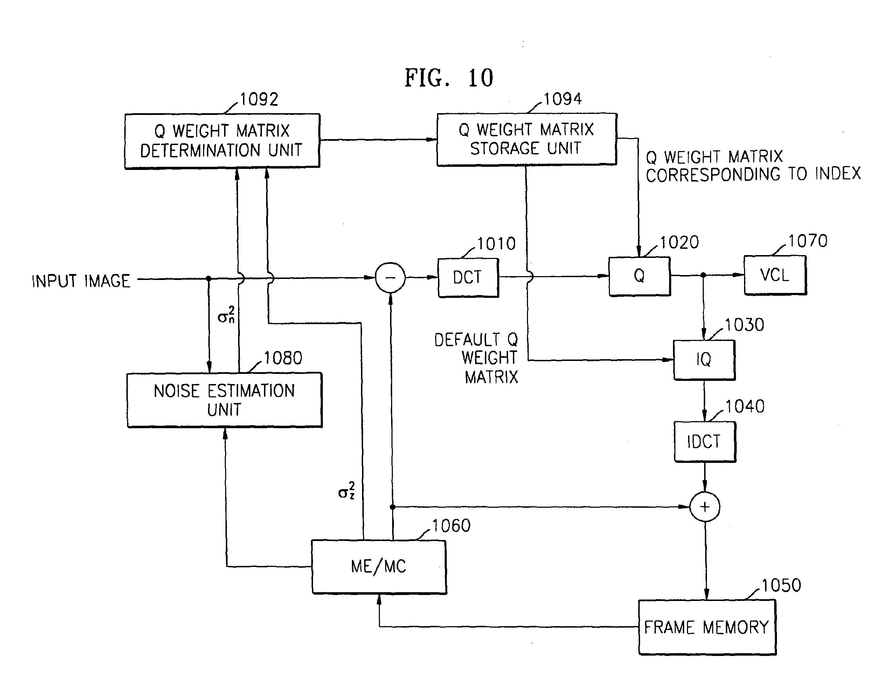

FIG. 10 illustrates a motion image encoder using a noise reduction method according to an embodiment of the present invention. Hereinafter, the motion image encoder of FIG. 10 using a noise reduction method will be described with reference to FIGS. 1 through 10.

Comparing the general encoder shown in FIG. 1 to the encoder in FIG. 10, the motion image encoder, in FIG. 10, according to an embodiment of the present invention further includes a noise estimation unit 1080, a quantization (Q) weight matrix determination unit 1092, and a Q weight matrix storage unit 1094. A DCT unit 1010, an IDCT unit 1040, a frame memory 1050, a motion estimation (ME)/motion compensation (MC) unit 1060, and a variable length coding (VLC) unit 1070 have the same functionality as corresponding units of the encoder shown in FIG. 1, and therefore, their descriptions will be omitted here.

The Q weight matrix determination unit 1092 determines a quantization (Q) weight matrix, using noise variances $\sigma^2_n$ and $\sigma^2_z$ which are transmitted from the noise estimation unit 1080 and the ME/MC unit 1060, respectively. Also, the Q weight matrix determination unit 1092 transmits index information regarding the Q weight matrix to the Q weight matrix storage unit 1094.

Hereinafter, the operation of the Q weight matrix determination unit 1092 will be described in detail. The Q weight matrix determination unit 1092 determines a Q weight matrix with noise variances $\sigma^2_n$ and $\sigma^2_z$ which are transmitted from the noise estimation unit 1080 and the ME/MC unit 1060, respectively.

$F(k,l)$ is calculated by Equation (7) in connection with Equation (8) and FIGS. 8 and 9. Next, as shown in FIG. 8C, each of the DCT coefficients $V(k,l)$ of an $8\times8$ image block is multiplied by $F(k,l)$ to obtain $W(k,l)$, and $W(k,l)$ is divided by a Q weight matrix in a quantization process.

A motion image encoder according to an embodiment of the present invention performs an integrated process in which each of the DCT coefficients $V(k,l)$ is multiplied by $F(k,l)$ to obtain $W(k,l)$ and $W(k,l)$ is divided by a Q weight matrix. If a position component of (k,l) for the Q weight matrix $QT$ is Q(k,l), a position component of (k,l) for the new Q weight matrix QT' is Q(k,l)/F(k,l).

In this embodiment, the multiplication and division processes are combined to make a process. That is, a plurality of $F$ matrices are predetermined using variances $\sigma^2_n$ and $\sigma^2_z$, and new Q weight matrices $QT'$ are calculated using the plurality of $F$ matrices and stored in the Q weight matrix storage unit 1094.

In this embodiment, five new Q weight matrices $QT'$ are calculated using the variances $\sigma^2_n$ and $\sigma^2_z$ and stored in the Q weight matrix storage unit 1094. If the variances $\sigma^2_n$ and $\sigma^2_z$ are determined, $\hat{\sigma}^2_n/\sigma^2$ may be calculated with these variances, using Equation (10).

Equation (7) reveals that F(k,l) is determined by $S(k,l)$, $\psi(k,l)$, and $\sigma^2_n/\sigma^2$. $S(k,l)$ is calculated using Equation (8). $\psi(k,l)$ changes according to the block type, depending on whether an input image is an inter block or an intra block. Here, $\sigma^2_n/\sigma^2$ is only a variable used in determining $F(k,l)$. In this embodiment, $\sigma^2_n/\sigma^2$ are classified for five cases, and five new Q weight matrices $QT'$ are created and stored in the Q weight matrix storage unit 1094.

The Q weight matrix determination unit 1092 quantizes $\sigma^2_n/\sigma^2$ using the variances $\sigma^2_n$ and $\sigma^2_z$ which are input from the noise estimation unit 1080 and the ME/MC unit 1060, respectively. Then, the Q weight matrix determination unit 1092 transmits a new Q matrix index to the Q weight matrix storage unit 1094 corresponding to the quantized $\sigma^2_n/\sigma^2$. If the Q weight matrices stored in the Q weight matrix storage unit 1094 are categorized into five cases based on $\sigma^2_n/\sigma^2$, the quantization process is performed on five levels and the Q matrix index is a value from 0 to 4.

When an image contains a large amount of noise, i.e., it has a greater noise variance, $\sigma^2_n/\sigma^2$ of each of the image blocks with small variances becomes greater. The greater $\sigma^2_n/\sigma^2$, the more $F(k,l)$ approximates 0, and the higher the frequency of image blocking, as is well known from Equations (7) and (8). To prevent the blocking of the image, $T_{cutoff}$ is used as shown in the following equation:

$$\sigma_n^2/\sigma^2 = \min(T_{cutoff}, \sigma_n^2/\sigma^2) \qquad (11)$$

In general, a value of $T_{cutoff}$ is set between 1 and 2.

The Q weight matrix storage unit 1094 selects a desired Q weight matrix based on Q weight matrix index information input from the Q weight matrix determination unit 1092 and transmits the Q weight matrix to a quantization (Q) unit 1020.

The Q unit 1020 receives the Q weight matrix and performs quantization using the Q weight matrix.

An inverse Q unit 1030 performs inverse quantization based on the default Q weight matrix.

New Q weight matrices may be arbitrarily determined by a user. The embodiment also describes removal of noise from a component Y of an input image block in a DCT domain. However, there is no restriction to which a component of the image block is selected from which noise is removed. For example, a component U or V may be selected when an appropriate additional weight matrix is provided.

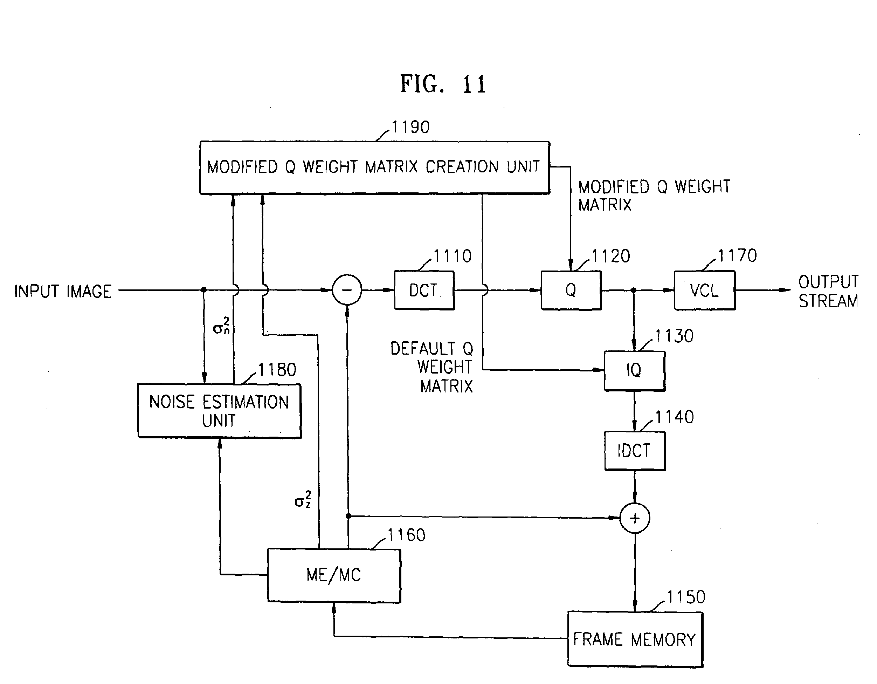

FIG. 11 illustrates a motion image encoder using a noise reduction method, according to another embodiment of the present invention. Comparing FIG. 1 to FIG. 11, the motion image encoder of FIG. 11 further includes a noise estimation unit 1180 and a modified quantization (Q) weight matrix creation unit 1190. In FIG. 11, a DCT unit 1110, an IDCT unit 1140, a frame memory 1150, an ME/MC unit 1160, and a VLC unit 1170 have the same functionality as corresponding units shown in FIG. 1, and therefore, their descriptions will be omitted here.

The modified Q weight matrix creation unit 1190 creates a modified quantization (Q) weight matrix using variances $\sigma_n^2$ and $\sigma_z^2$, which are transmitted from the noise estimation unit 1180 and the ME/MC unit 1160, respectively. The modified Q weight matrix is transmitted to the Q unit 1120.

Then, the Q unit 1120 performs quantization using the modified Q weight matrix input from the Q weight matrix creation unit 1190.

A method of creating a modified quantization (Q) weight matrix using variances $\sigma_n^2$ and $\sigma_z^2$ in accordance with an embodiment of the present invention will now be described in detail.

In connection with Equation (8) and the descriptions related to FIGS. 8 and 9, $F(k,l)$ is calculated using Equation (7). Next, as shown in FIG. 8(c), each of the DCT coefficients V(k,l) for an $8\times8$ image block is multiplied by F(k,l) to obtain $W(k,l)$, and $W(k,l)$ is divided by a Q weight matrix in the quantization process.

The modified Q weight matrix creation unit 1190, according to an embodiment of the present invention, performs an integrated process in which each of the DCT coefficients V(k,l) is multiplied by F(k,l) to obtain $W(k,l)$, and $W(k,l)$ is divided by a Q weight matrix in the quantization process. That is, multiplication and quantization are combined to create the integrated process. If a position component of (k,l) of a Q weight matrix $QT$ is Q(k,l), a position component of (k,l) of a new Q weight matrix QT' is Q(k,l)/F(k,l).

The modified Q weight matrix creation unit 1190 creates a modified Q weight matrix $QT'$ using variances $\sigma_n^2$ and $\sigma_z^2$ and provides the matrix $QT'$ to the Q unit 1120. The Q unit 1120 performs quantization on the matrix $QT'$. The inverse Q unit 1130 performs inverse quantization using the original default Q weight matrix.

While the present invention has been particularly shown and described with reference to exemplary embodiments thereof, it will be understood by those of ordinary skill in the art that various changes in form and details may be made therein without departing from the scope of the present invention as defined by the following claims. In particular, the present invention may be applied to any motion image encoding apparatus or method using a compression technique such as MPEG-1, MPEG-2, or MPEG-4.

The invention may also be embodied as computer readable code on a computer readable recording medium. The computer readable recording medium is any data storage device that stores data which is read by a computer system. Examples of the computer readable recording medium include read-only memory (ROM), random-access memory (RAM), CD-ROMs, magnetic tapes, floppy disks, optical data storage devices, and the like. Also, the computer readable codes may be transmitted via a carrier wave such as the Internet. The computer readable recording medium may also be distributed over network-coupled computer systems so that the computer readable code is stored and executed in a distributed fashion.

As described above, in a motion image encoding apparatus and method according to an embodiment of the present invention, high-performance filtering may be realized by using a noise reduction apparatus in a DCT domain and by adding memory and logic operations to a conventional motion image encoding apparatus and method, respectively. A motion image encoding apparatus and method according to an embodiment of the present invention are compatible with a conventional motion image encoding apparatus and method.

Although a few embodiments of the present invention have been shown and described, it would be appreciated by those skilled in the art that changes may be made in this embodiment without departing from the principles of the invention, the scope of which is defined in the claims.

**Claims**

1. A DCT-based motion image encoding method that uses a plurality of modified quantization weight matrices, the method comprising:

   selecting one of the plurality of modified quantization weight matrices based on noise information from input image data;
   performing DCT on the input image data; and
   performing quantization on the DCT input image data using the selected modified quanitzation weight matrix.

2. The method of claim 1, wherein the plurality of modified quantized weight matrices are classified based on the noise information regarding the input image data.

3. A DCT-based motion image encoding method, comprising:

   creating a modified quantization weight matrix using noise information from input image data;
   performing DCT on the input image data; and
   performing quantization on the DCT input image data using the modified quantization weight matrix.

4. The method of one of claims 1 to 3, wherein the noise information is a ratio of an input image variance to a noise variance.

5. The method of one of claims 1 to 4, further comprising performing inverse quantization on the quantized data, wherein the inverse quantization is performed using a default quantization weight matrix.

6. A DCT-based motion image encoding apparatus that uses a plurality of modified quantization weight matrices, the apparatus comprising:

   a modified quantization weight matrix storage unit which stores the plurality of modified quantization weight matrices;
   a modified quantization weight matrix determination unit which selects one of the plurality of modified quantization weight matrices based on noise information from input image data;
   a DCT unit which performs DCT on the input image data; and
   a quantization unit which performs quantization on the DCT transformed data using the selected modified quantization weight matrix.

7. A DCT-based motion image encoding apparatus, comprising:

   a modified quantization weight matrix creation unit which creates a modified quantization weight matrix based on noise information from input image data;
   a DCT unit which performs DCT on the input image data; and
   a quantization unit which performs quantization on the DCT transformed data using the created modified quantization weight matrix.

8. The apparatus of claim 6 or 7, adapted to perform the method of one of claims 1 to 5.

9. A computer-readable medium having stored thereon computer-executable instructions to perform the method of one of claims 1 to 5.

## FIG. 1 (PRIOR ART)

## FIG. 2 (PRIOR ART)

# FIG. 3 (PRIOR ART)

## FIG. 4 (PRIOR ART)

MASK 1 MASK 2 MASK 3 MASK 4

MASK 5 MASK 6 MASK 7 MASK 8

## FIG. 5 (PRIOR ART)

510 — MOTION DETECTOR

530 — FRAME MEMORY

520 — TEMPORAL RECURSIVE FILTER

INPUT IMAGE

FILTERED OUTPUT IMAGE

FIG. 6

FIG. 7

## FIG. 8A

v(m,n) → PREPROCESSOR → $\hat{w}(m,n)$ → DCT → $\hat{W}(k,l)$ → Q → $\hat{W}_q(k,l)$ → VLC → BIT STREAM

## FIG. 8B

v(m,n) → DCT → Y(k,l) → ⊗ → IDCT → $\hat{w}(m,n)$ → DCT → $\hat{W}(k,l)$ → Q → $\hat{W}_q(k,l)$ → VLC → BIT STREAM

F(k,l)

## FIG. 8C

v(m,n) → DCT → V(k,l) → ⊗ → $\hat{W}(k,l)$ → Q → $\hat{W}_q(k,l)$ → VLC → BIT STREAM

F(k,l)

EP 1 434 442 A2

## FIG. 9

EP 1 434 442 A2

## FIG. 10

INPUT IMAGE

- 1092 Q WEIGHT MATRIX DETERMINATION UNIT
- 1094 Q WEIGHT MATRIX STORAGE UNIT
- Q WEIGHT MATRIX CORRESPONDING TO INDEX
- 1010 DCT
- 1020 Q
- 1070 VCL
- $\sigma_n^2$
- 1080 NOISE ESTIMATION UNIT
- DEFAULT Q WEIGHT MATRIX
- 1030 IQ
- 1040 IDCT
- $\sigma_z^2$
- 1060 ME/MC
- 1050 FRAME MEMORY

EP 1 434 442 A2

# FIG. 11